# EUROPEAN PATENT APPLICATION

(11) **EP 4 624 643 A1**
(43) Date of publication of application: **01.10.2025**
(21) Application number: 23894784.0
(22) Date of filing: 26.09.2023
(51) Int. Cl.: D01F 6/04

(54) **POLYETHYLENE FIBER HAVING IMPROVED FEELING OF COOLNESS**

(30) Priority: 25.11.2022 KR 20220160405
(71) Applicant: Huvis Corporation, Seoul 06060 (KR)
(72) Inventor: KIM, Hyun Sun, Sejong 30150 (KR); HONG, Sung Jin, Jeonju-si, Jeollabuk-do 54850 (KR)
(74) Representative: Danubia Patent & Law Office LLC
(86) International application number: PCT/KR2023/014787
(87) International publication number: WO 2024/111854

(57) **Abstract**

The present invention relates to a polyethylene fiber having improved feeling of coolness, the polyethylene fiber comprising a polyethylene resin having number-average molecular weight (Mn) of 20,000 to 30,000 and Z-average molecular weight (Mz) of 130,000 to 300,000. The feeling of coolness is enhanced by controlling the number-average molecular weight and Z-average molecular weight for the feeling of coolness of polyethylene resin, and processability and flexibility are improved to thus render the polyethylene fiber suitable as clothing.

## Description

### [Technical Field]

The present disclosure relates to a polyethylene fiber having improved feeling of coolness, and more particularly, to a polyethylene fiber having improved feeling of coolness, in which the feeling of coolness is improved by controlling the molecular weight of a polyethylene resin forming the polyethylene fiber.

### [Background Art]

Clothing has a variety of types depending on the climate of the four seasons, and in particular, thin and breathable fabrics are used to avoid strong sunlight and hot temperatures in summer. Summer clothing has limitations in simply developing increased breathable or lightweight materials to provide feeling of coolness, and thus many textile fabrics with direct feeling of coolness have been developed using functional materials that absorb heat by combining with moisture.

Conventional textile fabrics with cooling functions have been often used with a technology of providing a cooling function by containing inorganic materials such as titanium dioxide and zinc oxide into the fibers or fabrics to reflect and block ultraviolet and infrared rays from sunlight.

As these prior arts, Korean Patent Publication No. 2001-91286 relates to a fiber having a cooling effect by sunlight reflection properties, and more particularly, to a fiber having a cooling effect by containing zinc magnesium titanate, which has a property of fully reflecting sunlight to the outside without absorbing the sunlight, thereby suppressing the temperature rise of the fiber itself. Thus, there are provided a new fiber having a cooling effect and additives thereof by sintering three components of zinc oxide, magnesium oxide, and titanium dioxide at a high temperature to prepare zinc magnesium titanate (ZMT), which is a composite oxide, and mixing the ZMT to effectively reflect ultraviolet rays, thereby preventing the absorption of solar energy.

However, as described above, the cooling function through ultraviolet rays using inorganic materials has no function indoors without sunlight, and has a disadvantage of being inadequate in blocking infrared rays that radiate heat. In addition, the cooling function has only a function of blocking the absorption of external heat, but has an insufficient function of emitting internal body heat to the outside, and it is more difficult to feel feeling of coolness while being wet due to sweat generated during intense exercise.

Accordingly, textile fabrics containing functional materials to have feeling of coolness have been developed to provide a cooling function indoors and outdoors. Korean Patent Registration No. 10-897866 proposes a cooling fabric coated with a cooling functional composition prepared by including an organic acid or an alkali salt thereof, peppermint oil, jojoba oil, an organic binder, and the remainder of purified water. In addition, Korean Patent Publication No. 2013-0013477 proposes a cooling fabric coated with a cooling functional composition prepared by a secondary composition prepared by mixing a primary composition containing primary and secondary monomers, latent heat materials, natural oils, natural sugars, nucleating agents, and water, with an antibacterial agent, an organic binder, etc.

However, since textile fabrics having such feeling of coolness require preparation of a separate cooling agent composition by mixing a plurality of additives, and a separate post-processing process to adhere the cooling composition to the surface of the fabric, there is a problem in that considerable time and cost for production are required, and the cooling function deteriorates as the coated cooling composition disappears due to friction or washing.

Recently, a textile fabric using yarn having feeling of coolness using a high-density polyethylene (HDPE) resin with high thermal conductivity has been developed.

Korean Patent Registration No. 2110306 relates to an invention regarding a polyethylene fabric with excellent contact feeling of coolness, and discloses a polyethylene fabric using polyethylene yarn, and Korean Patent Registration No. 2202592 relates to an invention regarding a fabric having feeling of coolness and polyethylene yarn therefor, and discloses a polyethylene yarn having feeling of coolness through high thermal conductivity of a high-density polyethylene resin.

However, conventional fibers having feeling of coolness using a polyethylene resin simply used polyethylene fibers with high thermal conductivity, and had no significant difference from conventional polyethylene fibers.

### [Disclosure]

### [Technical Problem]

The present disclosure was invented to solve the problems of the prior art as described above, and an object of the present disclosure is to provide a polyethylene fiber having improved feeling of coolness by controlling the number-average molecular weight and Z-average molecular weight for the feeling of coolness of a polyethylene resin included in the polyethylene fiber.

Further, another object of the present disclosure is to provide a polyethylene fiber having improved feeling of coolness suitable for clothing, with excellent flexibility and processability by controlling the number-average molecular weight and Z-average molecular weight.

### [Technical Solution]

An aspect of the present disclosure provides a polyethylene fiber having improved feeling of coolness, the polyethylene fiber including a polyethylene resin having the number-average molecular weight (Mn) of 20,000 to 30,000 and Z-average molecular weight (Mz) of 130,000 to 300,000.

In addition, a ratio (Mz/Mn) of the Z-average molecular weight (Mz) to the number-average molecular weight (Mn) may be 5.5 to 10.

In addition, the number-average molecular weight (Mn) may be 22,000 to 28,000.

In addition, the Z-average molecular weight (Mz) may be 180,000 to 260,000.

In addition, the crystallinity of the polyethylene fiber may be 70 to 90%.

In addition, a Qmax value of the polyethylene fiber may be 0.3 W/cm² or more.

Another aspect of the present disclosure provides clothing including the polyethylene fiber.

### [Advantageous Effects]

According to the present disclosure, the polyethylene fiber having improved feeling of coolness has an effect of improving feeling of coolness by controlling the number-average molecular weight and Z-average molecular weight of the polyethylene resin included in the polyethylene fiber.

In addition, the polyethylene fiber according to the present disclosure has excellent flexibility and processability by controlling the number-average molecular weight and Z-average molecular weight, and thus is suitable for clothing.

### [Modes]

Hereinafter, preferred examples of the present disclosure will be described in detail. First, in describing the present disclosure, a detailed description of known functions and configurations incorporated will be omitted so as to avoid obscuring the gist of the present disclosure.

The terms "about", "substantially", and the like used in the present disclosure are used as a numerical value or a value close to the numerical value when inherent manufacturing and material tolerances are presented in the stated meaning, and used to prevent an unscrupulous infringer from unfairly using disclosed contents in which precise or absolute numerical values are mentioned to help in the understanding of the present disclosure.

The present disclosure relates to an improved polyethylene fiber formed with a polyethylene resin and having a main repeating unit of ethylene.

The polyethylene resin is characterized by the number-average molecular weight (Mn) of 20,000 to 30,000 and Z-average molecular weight (Mz) of 130,000 to 300,000.

In addition, it is preferable that the polyethylene resin has a melting index (MI) of 1 to 25 g/10 min and 0.91 to 1.01 g/cm³.

The number-average molecular weight (Mn) is a value obtained by dividing the total length of the polymer by the total number, and refers to the average length of chains of the polymer resin, and the Z-average molecular weight (Mz) refers to a molecular weight meaning the volume average of the polymer resin, also called a volume-average molecular weight.

The present disclosure provides a polyethylene fiber having improved feeling of coolness by controlling the number-average molecular weight (Mn) and Z-average molecular weight (Mz) of the polyethylene resin.

The polyethylene resin contained in the polyethylene fiber having improved feeling of coolness of the present disclosure preferably has the number-average molecular weight (Mn) of 20,000 to 30,000. If the number-average molecular weight (Mn) is less than 20,000, the physical properties of the polyethylene fiber may deteriorate, and if the number-average molecular weight (Mn) exceeds 30,000, the manufacturing processability of the polyethylene fiber may deteriorate. It is more preferable that the number-average molecular weight (Mn) is 22,000 to 28,000.

The polyethylene resin contained in the polyethylene fiber having improved feeling of coolness of the present disclosure preferably has the Z-average molecular weight (Mz) of 130,000 to 300,000. If the Z-average molecular weight (Mz) is less than 130,000 or more than 300,000, the fiber manufacturing processability may deteriorate or the flexibility of the fiber may deteriorate. It is more preferable that the Z-average molecular weight (Mz) is 180,000 to 260,000.

The present disclosure is an invention for improving feeling of coolness by controlling the number-average molecular weight (Mn) and the Z-average molecular weight (Mz). Preferably, the ratio (Mz/Mn) of the Z-average molecular weight (Mz) to the number-average molecular weight (Mn) is 5.5 to 10.

If the Mz/Mn is less than 5.5, the improvement in feeling of coolness is not significant and the fiber manufacturing processability may deteriorate, and if the Mz/Mn exceeds 10, the fiber properties deteriorate and flexibility may be reduced, which is unsuitable for clothing, and the feeling of coolness may be reduced.

The ratio (Mz/Mn) of the Z-average molecular weight (Mz) to the number-average molecular weight (Mn) is more preferably 7.5 to 9.5 to increase the feeling of coolness of the polyethylene fiber and for fiber properties.

It is preferable that the polyethylene fiber according to the present disclosure formed with the polyethylene resin as described above has the crystallinity of 70% or higher. If the crystallinity is less than 70%, the feeling of coolness may be reduced. The crystallinity of the polyethylene fiber having improved feeling of coolness is preferably 70 to 90% because if the crystallinity exceeds 90%, the fiber flexibility may be reduced.

The polyethylene fiber having improved feeling of coolness according to the present disclosure may be formed only with the polyethylene resin, or may be manufactured as a composite fiber with a synthetic resin such as another polyethylene resin, a polyester-based resin, a polyamide-based resin, etc.

The polyethylene fiber having improved feeling of coolness of the present disclosure may be manufactured by the same manufacturing process as conventional polyethylene fibers, and may be manufactured so that the number-average molecular weight (Mn) and Z-average molecular weight (Mz) of the polyethylene resin are within the above range, and a winding speed is about 2000 m/min or more due to high-speed processability when Mz/Mn is 5.5 to 10.

The polyethylene fiber having improved feeling of coolness according to the present disclosure manufactured as described above preferably has a Qmax value of 0.3 W/cm² or more due to high feeling of coolness.

The polyethylene fiber having improved feeling of coolness of the present disclosure is suitable for summer clothing due to excellent feeling of coolness and flexibility, and may be used for various other applications. Depending on the intended use, the polyethylene fiber may be manufactured with various finenesses of threads, and preferably manufactured with polyethylene threads of 75 to 400 D of about 36 to 220 F.

Hereinafter, a polyethylene fiber having improved feeling of coolness was manufactured by Examples according to the present disclosure. The present disclosure is not limited to these Examples.

### Examples 1 to 3 and Comparative Examples 1 to 3

A polyethylene resin was fed into an extruder to spin out a molten polymer, cooled using a cooling device, stretched to an overall draw ratio (DR) of 3.5 through two-stage stretching, and wound at a winding speed of 2100 m/min to manufacture a polyethylene fiber having improved feeling of coolness according to the present disclosure.

The melting index (MI), density, number-average molecular weight (Mn), and Z-average molecular weight (Mz) of the polyethylene resins of Examples 1 to 3 and Comparative Examples 1 to 3 were shown in Table 1, respectively, and other spinning conditions were performed in the same manner.

The crystallinity, melt strength, processability, contact feeling of coolness (Qmax), and modulus (initial elastic modulus) of the polyethylene fibers manufactured in Examples 1 to 3 and Comparative Examples 1 to 3 were measured and shown in Table 1.
* Melting index: Measured according to ASTM D1238. The measured temperature was 190°C. The weight was 2.16 kg.
* Molecular weight: Measured at 160°C using Gel Permeation Chromatography (EcoESC HLC-8421, Tosoh).
* Crystallinity: Measured using an XRD device (Bruker's D8 Discover).
* Melt Strength: A melt strand coming out of an orifice at a constant shear rate in a capillary rheometer was inserted between two wheels and the speed was increased to measure a force applied to the wheels.
* Processability: Grade 1 production volume at a speed of 2000 m/min or more/total production volume * 100 = yield (based on parts by weight)
* Contact feeling of coolness: Measured as the maximum instantaneous heat absorption amount, Qmax (w/cm²), using Thermofeel and Pf-QMM-01 devices under a temperature of 20°C and humidity of 65% according to JIS L 1927. A hot plate (contact feeling of coolness measurement sensor) was set to a temperature 20°C higher than room temperature (ΔT = 20°C)
* Modulus (initial elastic modulus): Measured using a universal testing machine (UTM) from Instron under a temperature of 20°C and humidity of 65%, with a sample length of 20 cm and an Instron measurement speed of 800 mm/min, according to ASTM D2256.

**[Table 1]**

| Classification | | Example 1 | Example 2 | Example 3 | Comparative Example 1 | Comparative Example 2 | Comparative Example 3 |
|---|---|---|---|---|---|---|---|
| Melting index (g/10min) | | 20 | 12 | 7.4 | 0.8 | 12 | 12 |
| Density (g/cm³) | | 0.956 | 0.962 | 0.958 | 0.958 | 0.96 | 0.956 |
| Molecular weight | Mn | 22,194 | 25,804 | 27,450 | 13,215 | 10,850 | 25,403 |
| | Mz | 185,968 | 199,890 | 253,000 | 169,020 | 195,845 | 133,000 |
| Mz/Mn | | 8.38 | 7.75 | 9.22 | 12.79 | 18.05 | 5.24 |
| Crystallinity (%) | | 75.4 | 80.1 | 81.4 | 67.3 | 66 | 65.3 |
| Melt Strength (cN) | | 5.84 | 5.11 | 5.4 | 4.57 | 3.3 | 3.01 |
| Processability (%) | | 97 | 97 | 93 | 61 | 73 | 71 |
| Qmax (W/cm²) | | 0.307 | 0.328 | 0.361 | 0.286 | 0.18 | 0.19 |
| Modulus (gf/D) | | 14.9 | 16.7 | 17.8 | 138.1 | 149.2 | 20.9 |

As shown in Table 1, it may be seen that Examples 1 to 3, in which Mz/Mn is within the range of 5.5 to 10, all have the crystallinity of 70% or higher, the melt strength of 5 cN or higher, and the processability of 90% or higher, which are superior to those of Comparative Examples 1 to 3. In addition, it may be seen that Examples 1 to 3 have Qmax of 0.3 W/cm² or more, which is greatly improved compared to Comparative Examples 1 to 3, and it may be seen that the flexibility of polyethylene fiber may be evaluated through the Modulus, and the polyethylene fiber has flexibility with Modulus of 20 gf/D or less.

## Claims

1. A polyethylene fiber having improved feeling of coolness, comprising a polyethylene resin having number-average molecular weight (Mn) of 20,000 to 30,000 and Z-average molecular weight (Mz) of 130,000 to 300,000.

2. The polyethylene fiber having improved feeling of coolness of claim 1, wherein a ratio (Mz/Mn) of the Z-average molecular weight (Mz) to the number-average molecular weight (Mn) is 5.5 to 10.

3. The polyethylene fiber having improved feeling of coolness of claim 1, wherein the number-average molecular weight (Mn) is 22,000 to 28,000.

4. The polyethylene fiber having improved feeling of coolness of claim 1, wherein the Z-average molecular weight (Mz) is 180,000 to 260,000.

5. The polyethylene fiber having improved feeling of coolness of claim 1, wherein the crystallinity of the polyethylene fiber is 70 to 90%.

6. The polyethylene fiber having improved feeling of coolness of claim 1, wherein a Qmax value of the polyethylene fiber is 0.3 W/cm² or more.

7. Clothing comprising the polyethylene fiber according to any one of claims 1 to 6.
